# EUROPEAN PATENT APPLICATION

(11) **EP 3 159 425 A1**
(43) Date of publication of application: **26.04.2017**
(21) Application number: 16194282.6
(22) Date of filing: 18.10.2016
(51) Int. Cl.: C23C 4/02, C23C 4/18, C23C 24/04, B23P 6/00, F01D 5/00

(54) **ARTICLE, TURBINE COMPONENT AND AIRFOIL REFURBISHMENT METHODS**

(30) Priority: 21.10.2015 US 201514918910
(71) Applicant: General Electric Company, Schenectady, NY 12345 (US)
(72) Inventor: LEVY, Lawrence Matthew, Greenville, SC 29615 (US); THOMPSON, Christopher Edward, Greenville, SC 29615 (US); WHIMS, Lawrence James, Greenville, SC 29615 (US)
(74) Representative: Pöpper, Evamaria

(57) **Abstract**

An article treatment method is disclosed including removing an affected area (200) from an article (100), the article (100) including the affected area (200) and a substrate (102) composed of a substrate material (104), forming an unaffected surface (300). A structural material (302) is applied to the unaffected surface (300) by cold spraying a plurality of particles of the structural material (302) from a cold spray apparatus (304). The structural material (302) and the article (100) are finished, forming a treated article (500) including an unused article conformation. A turbine component treatment method is disclosed for a turbine component (106) including a hard-to-weld (htw) alloy, wherein applying the structural material (302) includes impacting the plurality of particles, and plastically deforming the plurality of particles to form a mechanical bond between the structural material (302) and the htw alloy. An airfoil treatment method is disclosed further including the cold spraying forming a near net shape (402) of an unused airfoil composition.

## Description

### FIELD OF THE INVENTION

The present invention is directed to methods for treating articles, turbine components and airfoils. More particularly, the present invention is directed to methods for treating articles, turbine components and airfoils including applying structural material by cold spraying to form an article, a turbine component or an airfoil with an unused conformation.

### BACKGROUND OF THE INVENTION

Hard-to-weld (HTW) alloys, such as nickel-based superalloys and certain aluminum-titanium alloys, due to their gamma prime and various geometric constraints, are susceptible to gamma prime strain aging, liquation and hot cracking. These materials are also difficult to join when the gamma prime phase is present in volume fractions greater than about 30%, which may occur when aluminum or titanium content exceeds about 3%.

These HTW materials may be incorporated into components of gas turbine engines such as airfoils, blades (buckets), nozzles (vanes), shrouds, combustors, rotating turbine components, wheels, seals, 3d-manufactured components with HTW alloys and other hot gas path components. During operation, components formed from HTW may be subjected to conditions which cause portions of the component to be worn down, removing HTW material and resulting in a reduced conformation as compared to the unused conformation of the component. By way of example, the tips of turbine airfoils such as blades (buckets) may be worn down over time, reducing efficiency of the turbine. Repairs of such wear are impaired by the difficulty in joining HTW materials, making standard repair techniques difficult. Rebuilding such components using hot processes such as laser cladding or conventional thermal spray yields deposited material which is weakened or cracked by the elevated temperatures. Brazing techniques are unsuitable because braze materials or elements are incorporated into the component which may not meet operational requirements.

### BRIEF DESCRIPTION OF THE INVENTION

In an exemplary embodiment, an article treatment method includes removing an affected area from an article, the article including the affected area and a substrate composed of a substrate material, forming an unaffected surface. A structural material is applied to the unaffected surface by cold spraying a plurality of particles of the structural material from a cold spray apparatus. The structural material and the article are finished, forming a treated article including an unused article conformation.

In another exemplary embodiment, a turbine component treatment method includes removing the affected area from a turbine component, the turbine component including the affected area and a substrate composed of a hard-to-weld (HTW) alloy, forming an unaffected surface. Removing the affected area includes a process selected from the group consisting of mechanically abrading the affected area, chemically etching the affected area, thermally cleaning the affected area under vacuum, and combinations thereof. A structural material is applied to the unaffected surface by cold spraying a plurality of particles of the structural material from a cold spray apparatus, impacting the plurality of particles, and plastically deforming the plurality of particles to form a mechanical bond between the structural material and the HTW alloy. The structural material and the turbine component are finished, forming a treated turbine component including an unused turbine component conformation. Finishing the structural material and the turbine component include applying a finishing technique selected from the group consisting of grinding, polishing, peening, heat treating and combinations thereof.

In another exemplary embodiment, an airfoil treatment method includes removing the affected area from an airfoil, the airfoil including the affected area and a substrate composed of a hard-to-weld (HTW) alloy, forming an unaffected surface. Removing the affected area includes a process selected from the group consisting of mechanically abrading the affected area, chemically etching the affected area, thermally cleaning the affected area under vacuum, and combinations thereof. A structural material is applied to the unaffected surface by cold spraying a plurality of particles of the structural material from a cold spray apparatus, impacting the plurality of particles, and plastically deforming the plurality of particles to form a mechanical bond between the structural material and the HTW alloy, forming a near net shape of an unused airfoil conformation. The structural material and the airfoil are finished, forming a treated airfoil including the unused airfoil conformation. Finishing the structural material and the airfoil includes applying a finishing technique selected from the group consisting of grinding, polishing, peening, heat treating and combinations thereof. The unused airfoil conformation includes a planar airfoil tip.

Other features and advantages of the present invention will be apparent from the following more detailed description of the preferred embodiment, taken in conjunction with the accompanying drawings, which illustrate, by way of example, the principles of the invention.

### BRIEF DESCRIPTION OF THE DRAWINGS

FIG. 1 is a perspective view of a portion of an article having an unused article conformation, according to an embodiment of the present disclosure.
FIG. 2 is a perspective view of a portion of an article similar to the article of FIG. 1, but having an affected area, according to an embodiment of the present disclosure.
FIG. 3 is a perspective view of a portion of the article of FIG. 2 following removal of the affected area and during application of structural material on the unaffected surface, according to an embodiment of the present disclosure.
FIG. 4 is a perspective view of a portion of the article of FIG. 3 following application of the structural material on the unaffected surface, according to an embodiment of the present disclosure.
FIG. 5 is a perspective view of a portion of the article of FIG. 4 following finishing of the article and formation of the treated article having the unused article conformation, according to an embodiment of the present disclosure.

Wherever possible, the same reference numbers will be used throughout the drawings to represent the same parts.

### DETAILED DESCRIPTION OF THE INVENTION

Provided are exemplary methods for treating articles, turbine components and airfoils. Embodiments of the present disclosure, in comparison to methods not utilizing one or more features disclosed herein, reduce or eliminate the need to design and test for a new material, decrease costs, improve component service lifetime, improve reparability, improve durability, improve tensile strength, improve fatigue resistance, improve creep resistance, improve oxidation rate, improve corrosion rate, improve elastic modulus, improve thermal expansion coefficient, improve Poisson's ratio, improve specific heat, improve density, improve process efficiency, improve material efficiency, or a combination thereof.

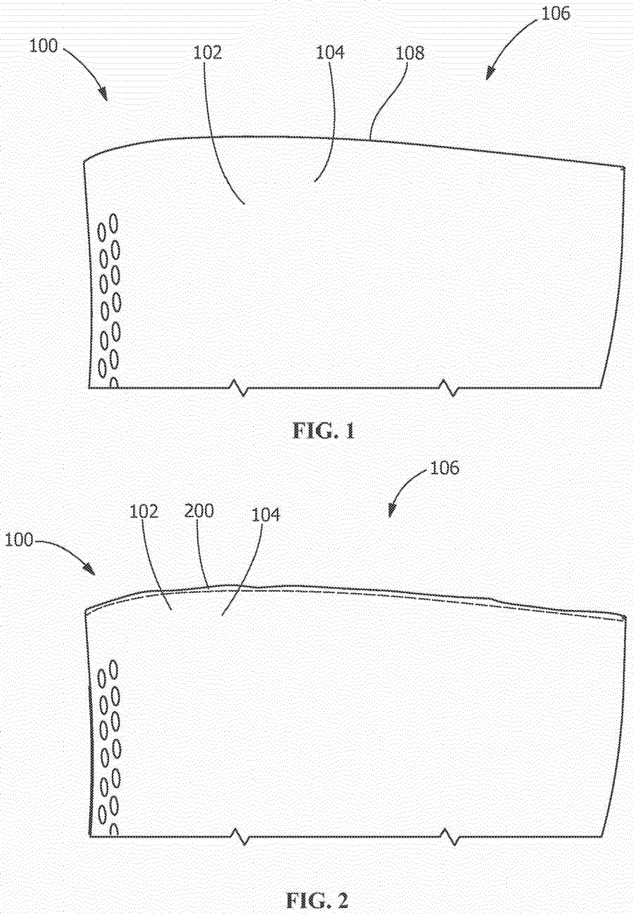

Referring to FIG. 1, in one embodiment, an article 100 includes a substrate 102 composed of a substrate material 104, and further includes an unused article conformation. The unused article conformation may be an as-manufactured and prior-to-use conformation for the article 100. The unused article conformation may also be an intended prior-to-use conformation for the article 100 which differs from the article 100 as initially manufactured, or as modified, purposefully or accidentally, prior to use.

In one embodiment, the article 100 is a turbine component 106. The turbine component 106 may be any suitable turbine component 106, including, but not limited to, at least one of an airfoil, a nozzle (vane), a bucket (blade) having a bucket (blade) tip 108, a shroud, a combustion fuel nozzle, a 3d-manufactured component, a hot gas path component, a combustor, a combustion transition piece, a combustion liner, a seal, a rotating component, a wheel, and a disk.

In one embodiment, the substrate material 104 is an HTW alloy. As used herein, an "HTW alloy" is an alloy which exhibits liquation, weld and strain-age cracking, and which is therefor impractical to weld. In a further embodiment, the HTW alloy is a superalloy. In yet a further embodiment, the HTW alloy is a nickel-based superalloy or aluminum-titanium superalloy. The HTW alloy may include, but is not limited to, GTD 111, GTD 444, GTD262, René N2, René N4, René N5, René N6, René 65, René 77 (Udimet 700), René 80, René 88DT, René 104, René 108, René 125, René 142, René 195, René N500, René N515, CM247, MarM247, CMSX-4, MGA1400, MGA2400, IN100, INCONEL 700, INCONEL 738, INCONEL 792, DS Siemet, CMSX10, PWA1480, PWA1483, PWA 1484, TMS-75, TMS-82, Mar-M-200, UDIMET 500, ASTROLOY, and combinations thereof.

As used herein, "ASTROLOY" refers to an alloy including a composition, by weight, of about 15% chromium, about 17% cobalt, about 5.3% molybdenum, about 4% aluminum, about 3.5% titanium, and a balance of nickel.

As used herein, "DS Siemet" refers to an alloy including a composition, by weight, of about 9% cobalt, about 12.1% chromium, about 3.6% aluminum, about 4% titanium, about 5.2% tantalum, about 3.7% tungsten, about 1.8% molybdenum, and a balance of nickel.

As used herein, "GTD111" refers to an alloy including a composition, by weight, of about 14% chromium, about 9.5% cobalt, about 3.8% tungsten, about 4.9% titanium, about 3% aluminum, about 0.1% iron, about 2.8% tantalum, about 1.6% molybdenum, about 0.1% carbon, and a balance of nickel.

As used herein, "GTD262" refers to an alloy including a composition, by weight, of about 22.5% chromium, about 19% cobalt, about 2% tungsten, about 1.35% niobium, about 2.3% titanium, about 1.7% aluminum, about 0.1% carbon, and a balance of nickel.

As used herein, "GTD444" refers to an alloy including a composition, by weight, of about 7.5% cobalt, about 0.2% iron, about 9.75% chromium, about 4.2% aluminum, about 3.5% titanium, about 4.8% tantalum, about 6% tungsten, about 1.5% molybdenum, about 0.5% niobium, about 0.2% silicon, about 0.15% hafnium, and a balance of nickel.

As used herein, "MGA1400" refers to an alloy including a composition, by weight, of about 10% cobalt, about 14% chromium, about 4% aluminum, about 2.7% titanium, about 4.7% tantalum, about 4.3% tungsten, about 1.5% molybdenum, about 0.1% carbon, and a balance of nickel.

As used herein, "MGA2400" refers to an alloy including a composition, by weight, of about 19% cobalt, about 19% chromium, about 1.9% aluminum, about 3.7% titanium, about 1.4% tantalum, about 6% tungsten, about 1% niobium, about 0.1% carbon, and a balance of nickel.

As used herein, "PMA 1480" refers to an alloy including a composition, by weight, of about 10% chromium, about 5% cobalt, about 5% aluminum, about 1.5% titanium, about 12% tantalum, about 4% tungsten, and a balance of nickel.

As used herein, "PWA1483" refers to an alloy including a composition, by weight, of about 9% cobalt, about 12.2% chromium, about 3.6% aluminum, about 4.1% titanium, about 5% tantalum, about 3.8% tungsten, about 1.9% molybdenum, and a balance of nickel.

As used herein, "PMA 1484" refers to an alloy including a composition, by weight, of about 5% chromium, about 10% cobalt, about 2% molybdenum, about 5.6% aluminum, about 9% tantalum, about 6% tungsten, and a balance of nickel.

As used herein, "René N2" refers to an alloy including a composition, by weight, of about 7.5% cobalt, about 13% chromium, about 6.6% aluminum, about 5% tantalum, about 3.8% tungsten, about 1.6% rhenium, about 0.15% hafnium, and a balance of nickel.

As used herein, "René N4" refers to an alloy including a composition, by weight, of about 9.75% chromium, about 7.5% cobalt, about 4.2% aluminum, about 3.5% titanium, about 1.5% molybdenum, about 6.0% tungsten, about 4.8% tantalum, about 0.5% niobium, about 0.15% hafnium, and a balance of nickel.

As used herein, "René N5" refers to an alloy including a composition, by weight, of about 7.5% cobalt, about 7.0% chromium, about 6.5% tantalum, about 6.2% aluminum, about 5.0% tungsten, about 3.0% rhenium, about 1.5% molybdenum, about 0.15% hafnium, and a balance of nickel.

As used herein, "René N6" refers to an alloy including a composition, by weight, of about 12.5% cobalt, about 4.2% chromium, about 7.2% tantalum, about 5.75% aluminum, about 6% tungsten, about 5.4% rhenium, about 1.4% molybdenum, about 0.15% hafnium, and a balance of nickel.

As used herein, "René 65" refers to an alloy including a composition, by weight, of about 13% cobalt, up to about 1.2% iron, about 16% chromium, about 2.1% aluminum, about 3.75% titanium, about 4% tungsten, about 4% molybdenum, about 0.7% niobium, up to about 0.15% manganese, and a balance of nickel.

As used herein, "René 77 (Udimet 700)" refers to an alloy including a composition, by weight, of about 15% chromium, about 17% cobalt, about 5.3% molybdenum, about 3.35% titanium, about 4.2% aluminum, and a balance of nickel.

As used herein, "René 80" refers to an alloy including a composition, by weight, of about 14% chromium, about 9.5% cobalt, about 4% molybdenum, about 3% aluminum, about 5% titanium, about 4% tungsten, about 0.17% carbon, and a balance of nickel.

As used herein, "René 88DT" refers to an alloy including a composition, by weight, of about 16% chromium, about 13% cobalt, about 4% molybdenum, about 0.7% niobium, about 2.1% aluminum, about 3.7% titanium, about 4% tungsten, about 0.1% rhenium, a maximum of about 4.3% rhenium and tungsten, and a balance of nickel.

As used herein, "René 104" refers to an alloy including a composition, by weight, of about 13.1% chromium, about 18.2% cobalt, about 3.8% molybdenum, about 1.9% tungsten, about 1.4% niobium, about 3.5% aluminum, about 3.5% titanium, about 2.7% tantalum, and a balance of nickel.

As used herein, "René 108" refers to an alloy including a composition, by weight, of about 8.4% chromium, about 9.5% cobalt, about 5.5% aluminum, about 0.7% titanium, about 9.5% tungsten, about 0.5% molybdenum, about 3% tantalum, about 1.5% hafnium, and a balance of nickel.

As used herein, "René 125" refers to an alloy including a composition, by weight, of about 8.5% chromium, about 10% cobalt, about 4.8% aluminum, up to about 2.5% titanium, about 8% tungsten, up to about 2% molybdenum, about 3.8% tantalum, about 1.4% hafnium, about 0.11% carbon, and a balance of nickel.

As used herein, "René 142" refers to an alloy including a composition, by weight, of about 6.8% chromium, about 12% cobalt, about 6.1% aluminum, about 4.9% tungsten, about 1.5% molybdenum, about 2.8% rhenium, about 6.4% tantalum, about 1.5% hafnium, and a balance of nickel.

As used herein, "René 195" refers to an alloy including a composition, by weight, of about 7.6% chromium, about 3.1% cobalt, about 7.8% aluminum, about 5.5% tantalum, about 0.1% molybdenum, about 3.9% tungsten, about 1.7% rhenium, about 0.15% hafnium, and a balance of nickel.

As used herein, "René N500" refers to an alloy including a composition, by weight, of about 7.5% cobalt, about 0.2% iron, about 6% chromium, about 6.25% aluminum, about 6.5% tantalum, about 6.25% tungsten, about 1.5% molybdenum, about 0.15% hafnium, and a balance of nickel.

As used herein, "René N515" refers to an alloy including a composition, by weight, of about 7.5% cobalt, about 0.2% iron, about 6% chromium, about 6.25% aluminum, about 6.5% tantalum, about 6.25% tungsten, about 2% molybdenum, about 0.1% niobium, about 1.5% rhenium, about 0.6% hafnium, and a balance of nickel.

As used herein, "MarM247" and "CM247" refer to an alloy including a composition, by weight, of about 5.5% aluminum, about 0.15% carbon, about 8.25% chromium, about 10% cobalt, about 10% tungsten, about 0.7% molybdenum, about 0.5% iron, about 1% titanium, about 3% tantalum, about 1.5% hafnium, and a balance of nickel.

As used herein, "IN100" refers to an alloy including a composition, by weight, of about 10% chromium, about 15% cobalt, about 3% molybdenum, about 4.7% titanium, about 5.5% aluminum, about 0.18% carbon, and a balance of nickel.

As used herein, "INCONEL 700" refers to an alloy including a composition, by weight, of up to about 0.12% carbon, about 15% chromium, about 28.5% cobalt, about 3.75% molybdenum, about 2.2% titanium, about 3% aluminum, about 0.7% iron, up to about 0.3% silicon, up to about 0.1% manganese, and a balance of nickel.

As used herein, "INCONEL 738" refers to an alloy including a composition, by weight, of about 0.17% carbon, about 16% chromium, about 8.5% cobalt, about 1.75% molybdenum, about 2.6% tungsten, about 3.4% titanium, about 3.4% aluminum, about 0.1% zirconium, about 2% niobium, and a balance of nickel.

As used herein, "INCONEL 792" refers to an alloy including a composition, by weight, of about 12.4% chromium, about 9% cobalt, about 1.9% molybdenum, about 3.8% tungsten, about 3.9% tantalum, about 3.1% aluminum, about 4.5% titanium, about 0.12% carbon, about 0.1 % zirconium, and a balance of nickel.

As used herein, "UDIMET 500" refers to an alloy including a composition, by weight, of about 18.5% chromium, about 18.5% cobalt, about 4% molybdenum, about 3% titanium, about 3% aluminum, and a balance of nickel.

As used herein, "Mar-M-200" refers to an alloy including a composition, by weight, of about 9% chromium, about 10% cobalt, about 12.5% tungsten, about 1% columbium, about 5% aluminum, about 2% titanium, about 10.14% carbon, about 1.8% hafnium, and a balance of nickel.

As used herein, "TMS-75" refers to an alloy including a composition, by weight, of about 3% chromium, about 12% cobalt, about 2% molybdenum, about 6% tungsten, about 6% aluminum, about 6% tantalum, about 5% rhenium, about 0.1% hafnium, and a balance of nickel.

As used herein, "TMS-82" refers to an alloy including a composition, by weight, of about 4.9% chromium, about 7.8% cobalt, about 1.9% molybdenum, about 2.4% rhenium, about 8.7% tungsten, about 5.3% aluminum, about 0.5% titanium, about 6% tantalum, about 0.1% hafnium, and a balance of nickel.

As used herein, "CMSX-4" refers to an alloy including a composition, by weight, of about 6.4% chromium, about 9.6% cobalt, about 0.6% molybdenum, about 6.4% tungsten, about 5.6% aluminum, about 1.0% titanium, about 6.5% tantalum, about 3% rhenium, about 0.1% hafnium, and a balance of nickel.

As used herein, "CMSX-10" refers to an alloy including a composition, by weight, of about 2% chromium, about 3% cobalt, about 0.4% molybdenum, about 5% tungsten, about 5.7% aluminum, about 0.2% titanium, about 8% tantalum, about 6% rhenium, and a balance of nickel.

Referring to FIG. 2, in one embodiment, the article 100 includes an affected area 200. The affected area 200 may include an area which differs from the unused article conformation, a deviant grain, an abrasion, a mechanical anomaly, a chemical anomaly, a crystalline anomaly, a structural anomaly, or a combination thereof. In one embodiment, referring to FIG. 2 in comparison to FIG. 1, the affected area 200 of the article 100 is recessed in comparison to the unused article conformation. By way of example only, such recessing may be caused by wear on the article 100 during use, by corrosion, by oxidation, or by a combination thereof. In a further embodiment, wherein the article 100 is an airfoil, such as a bucket (blade), the affected area 200 includes a bucket (blade) tip 108 which has been worn down due to contact with a shroud during turbine operation.

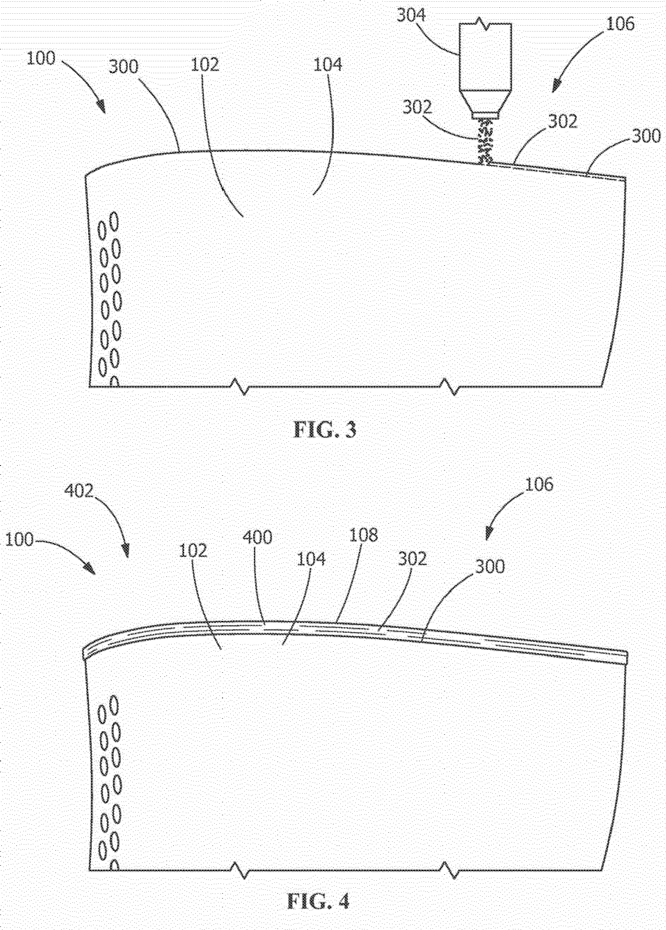

Referring to FIGS. 2 and 3, in one embodiment, an article treatment method includes removing the affected area 200 from the article 100, forming an unaffected surface 300. Removing the affected area 200 may include any suitable removal process, including, but not limited to, mechanically abrading the affected area 200, chemically etching the affected area 200, thermally cleaning the affected area 200 under vacuum, or a combination thereof. Removing the affected area 200 may include removing surface oxides.

Referring to FIG. 3, in one embodiment, a structural material 302 is applied to the unaffected surface 300 by cold spraying. Cold spraying the structural material 302 may include cold spraying a plurality of particles of the structural material 302 from a cold spray apparatus 304. Cold spraying the structural material 302 may further include impacting the plurality of particles of the structural material 302, and plastically deforming the plurality of particles of the structural material 302 to form a mechanical bond between the structural material 302 and the substrate material 104 at the unaffected surface 300.

The plurality of particles of the structural material 302 may include any suitable particle size, including, but not limited to, an average particle size of less than about 50 µm, alternatively less than about 75 µm, alternatively less than about 100 µm, alternatively between about 5 µm and about 100 µm, alternatively between about 10 µm and about 90 µm, alternatively between about 10 µm and about 75 µm, alternatively between about 15 µm and about 45 µm.

The structural material 302 may include any suitable material. In one embodiment, the structural material 302 is a complementary material compositionally distinct from the substrate material 302. In another embodiment, the structural material 302 is the substrate material 104. As used herein, "complementary" indicates that the structural material 302 is capable of forming a bond with the substrate material 104 which does not detach under operating conditions of the article 100, that the structural material 302 and the substrate material 104 are chemically compatible, that the structural material 302 and the substrate material 104 are physically compatible, and further that the structural material 302 includes a physical property that is at least about 50%, alternatively at least about 60%, alternatively at least about 70%, alternatively at least about 80%, alternatively at least about 90%, of a corresponding physical property of the substrate material 104. The physical property may be any suitable physical property, including, but not limited to, tensile strength, fatigue resistance, creep resistance, oxidation rate, corrosion rate, elastic modulus, thermal expansion coefficient, Poisson's ratio, specific heat, density, or a combination thereof. As used herein, "compositionally distinct" indicates that two materials have compositions which differ from one another to a degree sufficient to result in materially differing physical or chemical properties.

In another embodiment, applying the structural material 302 includes applying a first structural material and applying a second structural material, the first structural material being compositionally distinct from the second structural material. The first structural material and the second structural material may be applied in sequence. In one embodiment, applying the first structural material and the second structural material includes formation of a functional gradient. As used herein, formation of a "functional gradient" indicates addition of the first structural material and the second structural material such that the amount of the second structural material relative to the first structural material increases as the structural material 302 is applied. In a further embodiment, the functional gradient transitions from having the first structural material free of the second structural material to having the second structural material free of the first structural material as the structural material 302 is applied. Applying the structural material 302 may further include applying any number of additional structural materials which are compositionally distinct from the first structural material and the second structural material, and these additional structural materials may also form functional gradients.

In another embodiment, cold spraying the plurality of particles of the structural material 302 includes supersonic laser deposition of the plurality of particles of the structural material 302. Supersonic laser deposition may include the use of a laser to heat the plurality of particles of the structural material 302 in flight, as well as the substrate material 104, increasing deposition of structural material 302 per pass.

Referring to FIG. 4, in one embodiment, application of the structural material 302 to the unaffected surface 300 forms an unfinished portion 400 on the unaffected surface 300 of the article 100. In a further embodiment, applying the structural material 302 includes forming a near net shape 402 of the unused article conformation. As used herein, "near net shape" indicates that the unfinished portion 400 does not vary from the unused article conformation at any point by more than about 7.5 mm, alternatively by more than about 5 µm, alternatively by more than about 2.5 mm.

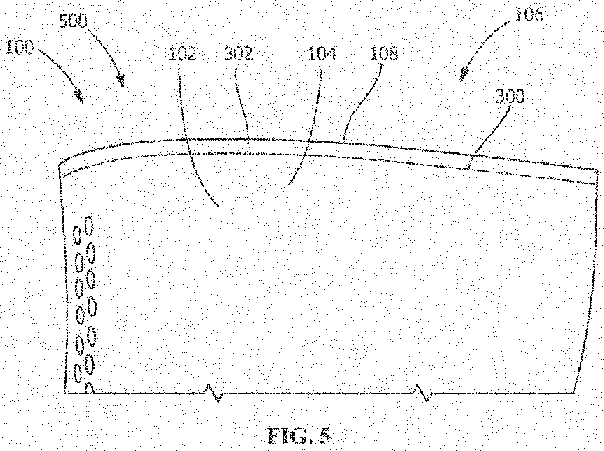

Referring to FIG. 5, in one embodiment, the structural material 302 and the article 100 are finished, forming a treated article 500, including the unused article conformation. Finishing the structural material 302 and the article 100 may include any suitable finishing process, including, but not limited to, grinding, polishing, peening, heat treating, or a combination thereof. Finishing the structural material 302 and the article 100 may also include diffusing the structural material 302 into the substrate material 104 to form a chemical bond. In one embodiment, wherein the article 100 is a bucket (blade), the unused article conformation includes a flat bucket (blade) tip 108 perpendicular to the length of the bucket (blade).

In one embodiment, heat treating the structural material 302 and the article 100 includes standard heat treating process steps and parameters for the substrate material 104. In a further embodiment, heat treating includes heating the structural material 302 and at least an area of the article 100 bordering the recess structural material 302 under vacuum or inert atmosphere to a predetermined temperature. The predetermined temperature may be any suitable temperature with respect to the material being heat treated. In one embodiment, the predetermined temperature is between about 1,000 °C to about 1,500 °C, alternatively between about 1,100 °C to about 1,350 °C. Heat treating may further include a predetermined temperature ramping program to the predetermined temperature, a hold time at the predetermined temperature, a predetermined temperature quenching program from the predetermined temperature, or a combination thereof.

In one embodiment, forming the treated article 500 includes developing a physical property for the structural material 302 that is at least about 50%, alternatively at least about 60%, alternatively at least about 70%, alternatively at least about 80%, alternatively at least about 90%, of a corresponding physical property of the substrate 102. The physical property may be any suitable physical property, including, but not limited to, tensile strength, fatigue resistance, creep resistance, oxidation rate, corrosion rate, elastic modulus, thermal expansion coefficient, Poisson's ratio, specific heat, density, or a combination thereof.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following clauses:
1. An article treatment method, comprising:
   removing an affected area from an article, the article including the affected area and a substrate composed of a substrate material, forming an unaffected surface;
   applying a structural material to the unaffected surface by cold spraying a plurality of particles of the structural material from a cold spray apparatus; and
   finishing the structural material and the article, forming a treated article including an unused article conformation.
2. The method of clause 1, wherein cold spraying the plurality of particles includes supersonic laser deposition of the plurality of particles.
3. The method of clause 1, wherein cold spraying the plurality of particles includes impacting the plurality of particles, plastically deforming the plurality of particles to form a mechanical bond between the structural material and the substrate material.
4. The method of clause 1, wherein providing the article includes providing a hard-to-weld (HTW) alloy as the substrate material.
5. The method of clause 1, wherein providing the article includes providing a turbine component as the article.
6. The method of clause 5, wherein providing the turbine component includes providing a turbine component selected from the group consisting of at least one of an airfoil, a nozzle (vane), a bucket (blade), a shroud, a combustion fuel nozzle, a 3d-manufactured component, a hot gas path component, a combustor, a combustion transition piece, a combustion liner, a seal, a rotating component, a wheel, and a disk.
7. The method of clause 1, wherein applying the structural material includes forming a near net shape of the unused article conformation.
8. The method of clause 1, wherein removing the affected area includes removing surface oxides.
9. The method of clause 8, wherein removing the affected area includes a process selected from the group consisting of mechanically abrading the affected area, chemically etching the affected area, thermally cleaning the affected area under vacuum, and combinations thereof.
10. The method of clause 1, wherein applying the structural material includes applying the structural material having an average particle size less than about 100 µm.
11. The method of clause 1, wherein applying the structural material includes applying the substrate material as the structural material.
12. The method of clause 1, wherein applying the structural material includes applying a complementary material compositionally distinct from the substrate material.
13. The method of clause 1, wherein applying the structural material includes applying a first structural material and applying a second structural material, the first structural material being compositionally distinct from the second structural material.
14. The method of clause 1, wherein finishing the structural material and the article includes applying a finishing technique selected from the group consisting of grinding, polishing, peening, heat treating and combinations thereof.
15. A turbine component treatment method, comprising:
   removing the affected area from a turbine component, the turbine component including the affected area and a substrate composed of a hard-to-weld (HTW) alloy, forming an unaffected surface, removing the affected area including a process selected from the group consisting of mechanically abrading the affected area, chemically etching the affected area, thermally cleaning the affected area under vacuum, and combinations thereof;
   applying a structural material to the unaffected surface by cold spraying a plurality of particles of the structural material from a cold spray apparatus, impacting the plurality of particles, and plastically deforming the plurality of particles to form a mechanical bond between the structural material and the HTW alloy; and
   finishing the structural material and the turbine component, forming a treated turbine component including an unused turbine component conformation, finishing the structural material and the turbine component including applying a finishing technique selected from the group consisting of grinding, polishing, peening, heat treating and combinations thereof.
16. The method of clause 15, wherein applying the structural material includes forming a near net shape of the unused turbine component conformation.
17. The method of clause 15, wherein applying the structural material includes applying the structural material having an average particle size less than about 100 µm.
18. The method of clause 15, wherein applying the structural material includes applying the substrate material as the structural material.
19. The method of clause 15, wherein applying the structural material includes applying a complementary material compositionally distinct from the substrate material.
20. An airfoil treatment method, comprising:
   removing the affected area from an airfoil, the airfoil including the affected area and a substrate composed of a hard-to-weld (HTW) alloy, forming an unaffected surface, removing the affected area including a process selected from the group consisting of mechanically abrading the affected area,
   chemically etching the affected area, thermally cleaning the affected area under vacuum, and combinations thereof;
   applying a structural material to the unaffected surface by cold spraying a plurality of particles of the structural material from a cold spray apparatus, impacting the plurality of particles, and plastically deforming the plurality of particles to form a mechanical bond between the structural material and the HTW alloy, forming a near net shape of an unused airfoil conformation; and finishing the structural material and the airfoil, forming a treated airfoil including the unused airfoil conformation, finishing the structural material and the airfoil including applying a finishing technique selected from the group consisting of grinding, polishing, peening, heat treating and combinations thereof,
wherein the unused airfoil conformation includes a planar airfoil tip.

## Claims

1. An article treatment method, comprising:
removing an affected area (200) from an article (100), the article (100) including the affected area (200) and a substrate (102) composed of a substrate material (104), forming an unaffected surface (300);
applying a structural material (302) to the unaffected surface (300) by cold spraying a plurality of particles of the structural material (302) from a cold spray apparatus (304); and finishing the structural material (302) and the article (100), forming a treated article (500) including an unused article conformation.

2. The method of claim 1, wherein cold spraying the plurality of particles includes supersonic laser deposition of the plurality of particles.

3. The method of claim 1, wherein cold spraying the plurality of particles includes impacting the plurality of particles, plastically deforming the plurality of particles to form a mechanical bond between the structural material (302) and the substrate material (104).

4. The method of claim 1, wherein providing the article (100) includes providing a hard-to-weld (HTW) alloy as the substrate material (104).

5. The method of claim 1, wherein providing the article (100) includes providing a turbine component (106) as the article (100).

6. The method of claim 1, wherein applying the structural material (302) includes forming a near net shape (402) of the unused article conformation.

7. The method of claim 1, wherein removing the affected area (200) includes a process selected from the group consisting of mechanically abrading the affected area (200), chemically etching the affected area (200), thermally cleaning the affected area (200) under vacuum, and combinations thereof.

8. The method of claim 1, wherein applying the structural material (302) includes applying the structural material (302) having an average particle size less than about 100 µm.

9. The method of claim 1, wherein applying the structural material (302) includes applying the substrate material (104) as the structural material.

10. The method of claim 1, wherein applying the structural material (302) includes applying a first structural material and applying a second structural material, the first structural material being compositionally distinct from the second structural material.

11. A turbine component treatment method, comprising:
removing an affected area (200) from a turbine component (106), the turbine component (106) including the affected area (200) and a substrate (102) composed of a hard-to-weld (HTW) alloy, forming an unaffected surface (300), removing the affected area (200) including a process selected from the group consisting of mechanically abrading the affected area (200), chemically etching the affected area (200), thermally cleaning the affected area (200) under vacuum, and combinations thereof;
applying a structural material (302) to the unaffected surface (300) by cold spraying a plurality of particles of the structural material from a cold spray apparatus (304), impacting the plurality of particles, and plastically deforming the plurality of particles to form a mechanical bond between the structural material (302) and the HTW alloy; and
finishing the structural material (302) and the turbine component (106), forming a treated turbine component (106) including an unused turbine component conformation, finishing the structural material and the turbine component (106) including applying a finishing technique selected from the group consisting of grinding, polishing, peening, heat treating and combinations thereof.

12. The method of claim 11, wherein applying the structural material (302) includes forming a near net shape (402) of the unused turbine component conformation.

13. The method of claim 11, wherein applying the structural material (302) includes applying the structural material (302) having an average particle size less than about 100 µm.

14. The method of claim 11, wherein applying the structural material (302) includes applying the substrate material (104) as the structural material (302).

15. An airfoil treatment method, comprising:
removing the affected area (200) from an airfoil, the airfoil including the affected area (200) and a substrate (102) composed of a hard-to-weld (HTW) alloy, forming an unaffected surface, removing the affected area including a process selected from the group consisting of mechanically abrading the affected area (200), chemically etching the affected area (200), thermally cleaning the affected area (200) under vacuum, and combinations thereof;
applying a structural material (302) to the unaffected surface (300) by cold spraying a plurality of particles of the structural material from a cold spray apparatus (304), impacting the plurality of particles, and plastically deforming the plurality of particles to form a mechanical bond between the structural material and the HTW alloy, forming a near net shape (402) of an unused airfoil conformation; and
finishing the structural material (302) and the airfoil, forming a treated airfoil including the unused airfoil conformation, finishing the structural material (302) and the airfoil including applying a finishing technique selected from the group consisting of grinding, polishing, peening, heat treating and combinations thereof,
wherein the unused airfoil conformation includes a planar airfoil tip (108).
